Europäisches Patentamt

European Patent Office

Office européen des brevets

(11) Veröffentlichungsnummer: **0 293 509**
**A2**

# EUROPÄISCHE PATENTANMELDUNG

(21) Anmeldenummer: 87114115.6

(22) Anmeldetag: 26.09.87

(51) Int. Cl.4: **B23Q 3/157**

(30) Priorität: 01.06.87 DE 3718322

(43) Veröffentlichungstag der Anmeldung:
07.12.88 Patentblatt 88/49

(84) Benannte Vertragsstaaten:
AT BE CH DE ES FR GB IT LI NL SE

(71) Anmelder: IMA-Norte Maschinenfabriken
Klessmann GmbH & Co.
Am Ölbach 19
D-4830 Gütersloh 1(DE)

(72) Erfinder: Peter, Gerhard
Sonnenhügel 5
D-4800 Bielefeld 15(DE)
Erfinder: Hille, Herbert
Markt 10
D-4840 Rheda-Wiedenbrück(DE)
Erfinder: Kempkensteffen, Heinz
Im grünen Winkel 1
D-4835 Rietberg(DE)

(74) Vertreter: Elbertzhagen, Otto et al
Patentanwälte Thielking & Elbertzhagen
Gadderbaumer Strasse 20
D-4800 Bielefeld 1(DE)

(54) **Werkzeugmaschine in Gestalt eines Bearbeitungszentrums.**

(57) Eine Werkzeugmaschine in Gestalt eines Bearbeitungszentrums ist mit einem Werkzeugmagazin, mit einem langen, in X-Richtung angeordneten Werkstücktisch und mit einer Arbeitsspindel ausgestattet, die eine endseitige Werkzeugaufnahme hat. Die Arbeitsspindel ist in einem senkrecht zum Werkstücktisch in Z-Richtung verfahrbaren Spindelkasten gelagert, der an einem Ständer in dieser Z-Richtung geführt ist. Der Ständer und der Werkstücktisch sind quer zu dessen Längsrichtung, also in Y-Richtung, relativ zueinander verfahrbar und der Ständer ist entlang dem Werkstücktisch in X-Richtung verfahrbar. Ferner ist am Spindelkasten ein mit zumindest einem Wechselarm bis zur Werkzeugaufnahme an der Spindel reichender Wechsler angeordnet. Bei einem solchen Bearbeitungszentrum soll die Speicherkapazität an bereit zu haltenden Werkzeugen erhöht werden, ohne die verfahrbaren Elemente, wie Ständer und Spindelkasten, der Maschine weiter zu belasten, und ohne die Werkzeugwechselzeiten zu erhöhen. Dazu ist am oder neben dem Ständer ein in Y-Richtung verfahrbarer Zwischenwechsler angeordnet, der einerseits in eine erste, mit dem spindelseitigen Werkzeugwechsler korrespondierende Wechselposition und andererseits in eine zweite Wechselposition an einem Kreuzungspunkt mit dem Förderweg eines Zubringers bewegbar ist. Der Zubringer ist an der vom Spindelkasten abgewandten Seite des Ständers angeordnet, und hat zumindest einen parallel zur X-Richtung mit dem Ständer mitgeführten Werkzeugplatz, der vorübergehend in der X-Richtung in eine Übergabeposition gegenüber einem Wechselplatz am Werkzeugmagazin unabhängig von der X-Position des Ständers verfahrbar ist.

Fig. 1

## Werkzeugmaschine in Gestalt eines Bearbeitungszentrums

Die Erfindung bezieht sich auf eine Werkzeugmaschine in Gestalt eines Bearbeitungszentrums mit einem Werkzeugmagazin, mit einem langen, in X-Richtung angeordneten Werkstücktisch und mit einer mit einer Werkzeugaufnahme ausgestatteten Arbeitsspindel, die in einem senkrecht zum Werkstücktisch in Z-Richtung verfahrbaren Spindelkasten gelagert ist, der an einem Ständer in der Z-Richtung geführt ist, wobei der Ständer und Werkstücktisch quer zu dessen Längsrichtung, also in Y-Richtung, relativ zueinander verfahrbar sind, sowie der Ständer entlang dem Werkzeugtisch in X-Richtung verfahrbar ist und wobei ferner am Spindelkasten ein mit zumindest einem Wechselarm bis zur Werkzeugaufnahme an der Spindel reichender Werkzeugwechsler angeordnet ist.

Auf dem Markt sind zahlreiche Ausführungen solcher ständerverfahrbaren Werkzeugmaschinen bekannt, die sich in der Anordnung der Werkzeugmagazine und der entsprechenden Werkzeugwechsler unterscheiden. Wesentlich ist bei einer als Bearbeitungszentrum ausgestalteten Werkzeugmaschine, das für verschiedene Bearbeitungsgänge an einem Werkstück unterschiedliche Werkzeuge in die Werkzeugaufnahme der Arbeitsspindel durch den Werkzeugwechsler eingewechselt werden können. Da eine immer größere Vielseitigkeit derartiger Bearbeitungszentren verlangt wird, erhöht sich ständig der Bedarf an unterschiedlichen Werkzeugen, die in dem maschineneigenen Werkzeugmagazin bereitgehalten werden müssen. Folglich muß die Kapazität der Werkzeugmagazine ständig erweitert werden.

Ein anderes Problem bei solchen Bearbeitungszentren stellen die Werkzeugwechselzeiten dar, wobei eine Minimierung der sogenannten Span-Zu-Span-Zeit angestrebt wird, also derjenigen Zeitspanne, die zwischen dem Außereingriffbringen des auszuwechselnden Werkzeugs und dem Eingriff des eingewechselten Werkzeugs am Werkstück liegt. Von daher ist es wünschenswert, das Werkzeugmagazin unmittelbar am Spindelkasten der Maschine anzuordnen, was jedoch wegen der hohen Gewichte und Beschleunigungskräfte nur bei Magazinen mit geringer Speicherkapazität möglich ist.

In anderer Ausführung werden deshalb die Magazine am Ständer der Maschine angeordnet, sie bewegen sich dabei zwar mit dem Ständer mit, jedoch muß der Spindelkasten stets eine meist obere Wechselposition anfahren, damit von dem spindelseitigen Werkzeugwechsler der Wechselplatz am Werkzeugmagazin erreicht werden kann.

Um die Speicherkapazität weiter zu erhöhen, ist auch schon vorgeschlagen worden, die Magazine an der Maschine selbst auswechselbar zu gestalten oder zumindest einen laufenden Austausch der Werkzeuge im Magazin mittels weiterer Wechselvorrichtungen vorzusehen. Solche Systeme schränken die Mobilität der Maschine ein.

Der Erfindung liegt nun die Aufgabe zugrunde, bei einem Bearbeitungszentrum der gattungsgemäßen Art die Speicherkapazität an bereitzuhaltenden Werkzeugen zu erhöhen, ohne die verfahrbaren Elemente der Maschine, wie Ständer oder Spindelkasten, zusätzlich zu belasten und ohne die Werkzeugwechselzeiten zu erhöhen.

Diese Aufgabe wird bei einem Bearbeitungszentrum nach der Erfindung dadurch gelöst, daß am oder hinter dem Ständer ein in Y-Richtung verfahrbarer, Zwischenwechsler angeordnet ist, der einerseits in eine erste, mit dem spindelseitigen Werkzeugwechsler korrespondierende Wechselposition und andererseits in eine zweite Wechselposition an einem Kreuzungspunkt mit dem Förderweg eines Zubringers bewegbar ist, der an der vom Spindelkasten abgewandten Seite des Ständers angeordnet ist und zumindest einen, parallel zur X-Richtung mit dem Ständer, mitgeführten Werkzeugplatz hat, der vorübergehend in der X-Richtung in eine Übergabeposition gegenüber einem Wechselplatz am Werkzeugmagazin unabhängig von der X-Position des Ständers verfahrbar ist.

Der besondere Vorteil eines erfindungsgemäßen Bearbeitungszentrums liegt darin, daß der spindelseitige Wechsler ohne großen Zeitverlust an den Zwischenwechsler ein Werkzeug abgeben oder von diesem übernehmen kann. Der Zwischenwechsler macht die Verfahrbewegungen des Maschinenständers mit, er befindet sich folglich ständig auf der X-Position des Maschinenständers. Weil der Zubringer, der mit dem Zwischenwechsler korrespondiert, seinen Werkzeugplatz in der X-Richtung mit dem Maschinenständer mitführt und sich nur zwecks eines Werkzeugtauschs mit dem Werkzeugmagazin in eine Übergabeposition getrennt von der X-Position des Maschinenständers begibt, braucht nun der Maschinenständer mit dem Zwischenwechsler nicht in eine gesonderte, auf den Werkzeugwechselplatz des Magazins ausgerichtete Übergabeposition in der X-Richtung zu verfahren. Dadurch wird erhebliche Zeit beim Werkzeugaustausch zwischen der Werkzeugaufnahme, der Arbeitsspindel und dem Werkzeugmagazin eingespart. Besonders wird dieser Vorteil bei Langtischmaschinen nutzbar, bei denen die Längsrichtung des Werkstücktisches in der X-Richtung liegt. Weiter kann die Kapazität des Werkzeugmagazins erheblich erhöht werden, ohne daß dies auf die Bewegungsabläufe der ständerverfahrbaren Werkzeugmaschine noch einen Einfluß hat.

Zweckmäßig sieht man in vorteilhafter Ausgestaltung der Erfindung am Werkzeugmagazin einen Übergabewechsler vor, der zwischen dem Wechselplatz des Magazins und der gegenüberliegenden Übergabeposition des Zubringers verfahrbar ist. Man erspart sich dadurch an dem verfahrbaren Zubringer eine komplizierte Übergabevorrichtung.

Nach einer Ausführungsform der erfindungsgemäßen Werkzeugmaschine kann vorgesehen werden, den Y-Zwischenwechsler einen konstanten Förderweg abfahren zu lassen, wodurch dann der Kreuzungspunkt zwischen diesem Zwischenwechsler und dem Zubringer in der Y-Richtung mit dem Ständer mitgeführt ist. Folglich muß auch der Zubringer in der Y-Richtung mit dem Ständer mitgeführt werden, wobei dann der Übergabewechsler zwischen dem Wechselplatz des Werkzeugmagazins und der jeweiligen Y-Position des Zubringers verfahrbar ist, damit die ständig wechselnden Y-Position des Zubringers relativ zum Wechselplatz am Werkzeugmagazin ausgeglichen werden kann.

In anderer Ausführung nach der Erfindung kann der Zubringer eine feste Y-Position haben, so daß der Kreuzungspunkt zwischen dem Zwischenwechsler und dem Zubringer lediglich in der X-Richtung wandert. Damit in jeder Y-Position des Ständers der Zubringer angefahren werden kann, muß der in Y-Richtung verfahrbare Zwischenwechsler derart gesteuert werden, daß der unterschiedliche Abstand des Ständers in der Y-Richtung zu dem Zubringer hin ausgeglichen wird.

In anderer Ausführung können der Zwischenwechsler und/oder der Zubringer Teile eines in der X-Y-Richtung verfahrbaren Portals sein. Dieses sogenannte Ladeportal kann beispielsweise in seiner Gesamtheit in der Y-Richtung bewegbar ausgebildet werden, wobei dann daran eine Längsführung in X-Richtung angeordnet ist, an der der X-Zubringer gelagert ist.

Der Zubringer kann ebenfalls an einer Längsführung in X-Richtung sowohl an der Maschine als auch am Werkzeugmagazin angeordnet werden. Im letzteren Fall sieht man am Werkzeugmagazin eine Längsführung vor, an der der Zubringer in Gestalt eines Schlittens gelagert ist.

Vorteilhaft wird der an der rückwärtigen Seite der Maschine befindliche X-Zubringer so gesteuert, daß nach der Entnahme eines Werkzeugs durch den Y-Zwischenwechsler sein Werkzeugplatz solange in der X-Richtung mit dem Maschinenständer mitgeführt wird, bis der Y-Zwischenwechsler ein Werkzeug in den Werkzeugplatz des X-Zubringers zurückgelegt hat. Für den Zwischenwechsler kann eine Warteposition nahe dem spindelseitigen Werkzeugwechsler vorgesehen werden, und solange sich der Zwischenwechsler in dieser Warteposition befindet, wird der Zubringer mit seinem Werkzeugplatz in der X-Richtung mit dem Ständer mitgeführt, damit der Zwischenwechsler nicht auf den Zubringer bei der Werkzeugübergabe bzw. -übernahme warten muß. Der Austausch eines Werkzeugs zwischen dem Zubringer und dem Magazin erfolgt, während der Y-Zwischenwechsler sich am Verfahrweg des X-Zubringers befindet. Dabei sieht man zweckmäßig nur einen einzigen Werkzeugplatz, sowohl beim X-Zubringer als auch beim Y-Zwischenwechsler vor. In anderer Ausführung kann der Werkzeugtausch zwischen dem X-Zubringer und dem Magazin dann erfolgen, wenn sich der Zwischenwechsler in einer Warteposition nahe der Spindel befindet. Für den Werkzeugwechsel zwischen dem Zubringer und dem Zwischenwechsler sollte dann wenigstens einer von beiden zwei Werkzeugplätze haben, von denen einer als Leerplatz für das zu übernehmende Werkzeug zur Verfügung steht.

Das wesentliche Merkmal der Erfindung liegt somit darin, daß der Zubringer am oder nahe dem Werkzeugmagazin als X-Achsen-Zubringer fungiert, während dem Zwischenwechsler die Aufgabe als Y-Achsenzubringer zukommt. Durch Trennung dieser Funktionen werden die Verfahrwege und -zeiten minimiert, welche die maschineneigenen Elemente, wie der Ständer und der Spindelkasten, benötigen, um einen Werkzeugwechsel mit dem Werkzeugmagazin zu vollziehen.

Weitere Vorteile der Erfindung ergeben sich auch durch die Speicherkapazität, welche durch den Zubringer oder den Zwischenwechsler bereit gestellt werden kann. Denn die an der Spindel zu wechselnden Werkzeuge müssen keineswegs zum Werkzeugmagazin hin- und herbefördert werden, wenn sie bei bestimmten Einsatzfolgen in einer Parkstellung bei dem Zwischenwechsler oder dem Zubringer verbleiben können. Zu diesem Zweck können der Zwischenwechsler und/oder der Zubringer mit mehreren Werkzeugplätzen ausgestattet werden.

Weitere vorteilhafte Ausgestaltungsmerkmale der Erfindung ergeben sich aus den Unteransprüchen.

Die Erfindung wird nachfolgend anhand der Zeichnung anhand einem Ausführungsbeispiel noch näher erläutert. Dabei zeigen:

Fig. 1 eine schematische Seitansicht eines Bearbeitungszentrums mit vertikaler Arbeitsspindel und mit ortsfestem rückwärtigem Werkzeugmagazin und

Fig. 2 die schematische Draufsicht auf das Beabeitungszentrum nach Fig. 1.

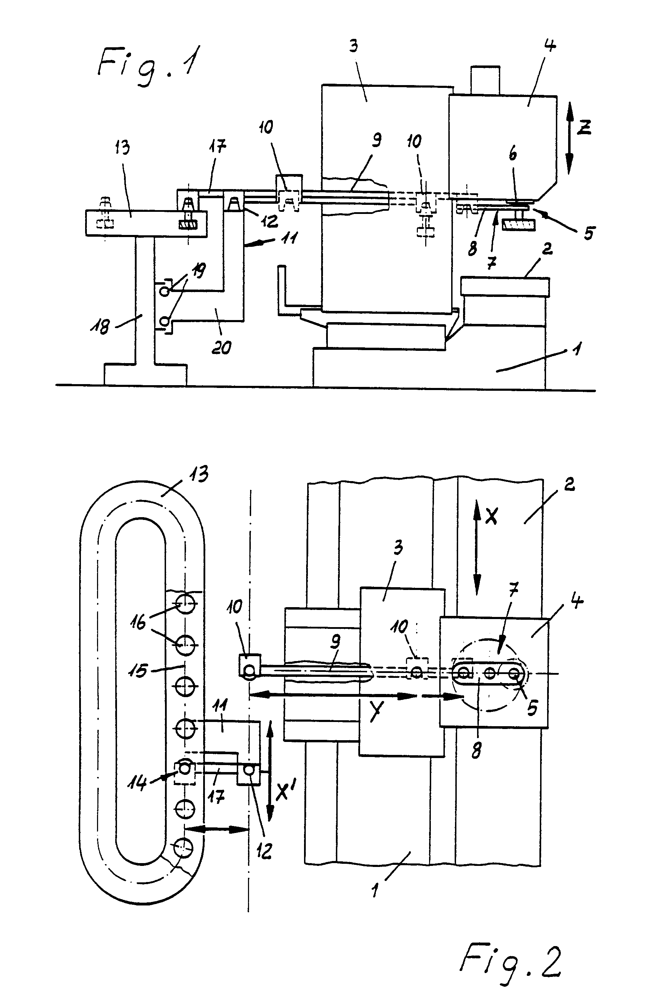

Im einzelnen erkennt man in Fig. 1 ein Maschinenbett, das vorderseitig einen Werkstücktisch 2 trägt. Wie Fig. 2 dazu veranschaulicht, handelt es sich um einen langen Werkstücktisch 2, dessen Längsrichtung in der X-Richtung liegt. Von der Seite des Werkstücktisches 2 aus gesehen, ist hinter dem Werkstücktisch 2 auf dem Maschinenbrett 1 ein Ständer 3 gelagert, der zumindest in der X-Richtung entlang dem Werkstücktisch 2 verfahrbar ist. In der Regel ist zusätzlich der Maschinenständer 3 auch quer zur X-Richtung, also in der Y-Richtung bewegbar, entscheidend ist hier jedoch die Relativverfahrbarkeit des Werkstücktisches 2 und des Maschinenständers 3 in der Y-Richtung. An der Vorderseite des Maschinenständers 3 ist ein Spindelkasten 4 in vertikaler Richtung geführt, es handelt sich hierbei um die Z-Richtung, die senkrecht auf der X-Y-Ebene steht. Unterseitig tritt aus dem Spindelkasten 4 eine Spindel 5 mit einer Werkzeugaufnahme 6 aus, und die Achse der Arbeitsspindel 5 steht senkrecht auf der Ebene des Werkstücktisches 2 und damit auf der X-Y- Ebene. Die Werkzeugaufnahme 6 ist an die Spannkegel üblicher Fräs-, Bohr- oder Gewindeschneidwerkzeuge angepaßt, wobei diese Werkzeuge üblicherweise einen Mitnehmerbund mit einer Umfangsnut haben, die für den Eingriff eines Werkzeuggreifers mitgenutzt werden kann. Solche Werkzeuggreifer sitzen an den Enden eines Greiferarms oder Greifzange 8 eines Werkzeugswechslers 7, der neben der Arbeitsspindel 5 an der Unterseite des Spindelkastens 4 angeordnet ist. Die Greiferzange 8 des Wechslers 7 ist zum einen in einer zur X-Y-Ebene parallelen Ebene - schwenkbar und kann zum anderen in Z-Richtung verschoben werden. Ihre endseitigen Werkzeuggreifer können somit in Eingriff mit dem Mitnehmerbund des betreffenden Werkzeugs gebracht werden, daß sich in der Werkzeugaufnahme 6 der Arbeitsspindel 5 befindet und nach Lösen einer nicht näher dargestellten Spannvorrichtung nach unten aus der Werkzeugaufnahme 6 herausgefahren werden kann. Dies geschieht durch Verschiebung der Greiferzange 8 in Z-Richtung. Danach schlägt die Greiferzange um eine zur Z-Achse parallele Achse um 180 Grad um, so daß der zweite Werkzeuggreifer der Greiferzange 8 mit der Werkzeugaufnahme 6 der Spindel 5 fluchtet. Das von diesem Werkzeuggreifer gehaltene Werkzeug kann dann dadurch in die Werkzeugaufnahme 6 eingewechselt werden, daß die Greiferzange 8 in Z-Richtung wieder angehoben wird. Für den Bearbeitungsvorgang gibt die Greiferzange 8 dann das Werkzeug an der Spindel 5 frei, während das in dem zweiten Werkzeuggreifer der Zange 8 befindliche Werkzeug für einen eventuellen Wechselvorgang an der von der Spindel 5 abgelegenen Seite bereitgehalten wird.

Am Maschinenständer 3 hinter dem Spindelkasten 4 befindet sich ein Zwischenwechsler 9 mit einem Werkzeughalter 1o, der lediglich schematisch dargestellt ist. Er ist am Ständer 3 in Y-Richtung oder in einer dazu parallelen Richtung verfahrbar, insbesondere kann er in dieser Richtung auch teleskopierbar ausgebildet sein, um größere Abstände überbrücken zu können. Somit kann er nach hinten hin in der Y-Richtung bis zu dem Kreuzungspunkt des Aktionsbereichs eines Zubringers 11 bewegt werden, um nach dorthin ein Werkzeug zurückzubringen oder von dort ein Werkzeug mitzunehmen. In ähnlicher Weise korrespondiert er mit der spindelseitigen Greiferzange 8, wobei ihm nahe der Eingriffsstelle mit dieser Greiferzange 8 eine Warteposition zugeordnet sein kann. Der Zwischenwechsler 9 ist als Y-Achsenzubringer zu bezeichnen, was in Bezug auf ein ortsfest angeordnetes Magazin 13 gilt, das vor der Maschine aus gesehen, noch hinter dem Zubringer 11 angeordnet ist.

Der Zubringer 11 hat einen Werkzeugplatz 12, dessen Besonderheit darin liegt, daß er parallel zum Maschinenständer 3 in der X-Richtung synchron mitgeführt werden kann. Das gilt für die Dauer zwischen einer Entnahme eines Werkzeugs von dem Werkzeugplatz 12 des Zubringers 11 bis zur Rückgabe des Werkzeugs dorthin durch den Zwischenwechsler 9. Solange wird in der zur X-Richtung parallelen X-Richtung der Zubringer 11 mit dem leeren Werkzeugplatz 12 synchron mit dem Ständer 3 mitbewegt, so daß er auf gleicher X-Position mit dem Y-Zubringer, näm lich dem Zwischenwechsler 9, bleibt. Von daher kommt dem Zubringer 11 die Funktion eines X-Achsenzubringers zu, der es für den Werkzeugwechsel erspart, den Maschinenständer 3 und damit in X-Richtung verfahrbaren Zwischenwechsler 9 auf eine besondere X-Position für den Wechselvorgang zu verfahren. Vielmehr kann bei jeder beliebigen X-Position des Maschinenständers entlang dem Werkstücktisch 2 über den Zwischenwechsler 9 der Werkzeugaustausch mit dem Werkzeugplatz 12 des Zubringers 11 erfolgen.

Der in Gestalt eines Schlittens ausgebildete Zubringer 11, hat eine feste Y-Position , so daß sich in der Y-Richtung unterschiedliche Abstände zu dem Maschinenständer 3 ergeben. Davon ist der Wechselvorgang zwischen dem Zwischenwechsler 9 und dem Zubringer 11 unabhängig, denn der Zwischenwechsler 9 ist derart gesteuert, daß unabhängig von der jeweiligen Position des Maschinenständers 3 in der Y-Richtung auch bei laufenden Bearbeitungsgängen der Werkzeughalter 1o des Zwischenwechslers 9 beim Werkzeugwechsel auf der Y-Position des Zubringers 11 gehalten wird.

Das Magazin 13 hat einen ortsfesten Wechselplatz 14, an den eine im Innern des Magazins 13 angeordnete Transportvorrichtung 15 mit einer Vielzahl von Speicherplätzen 16 für die darin bereit zu haltenden Werkzeuge mit jeweils einem der Speicherplätze 16 verfahren werden kann. An diesem Wechselplatz 14 ist zweckmäßig ein Übergabewechsler 17 am Magazin 13 angeordnet, der für den Austausch des betreffenden Werkzeugs zwischen dem Wechselplatz 14 und dem Zubringer 11 an einer gegenüberliegenden, ortsfesten Stelle an dessen Verfahrweg sorgt.

Anders als in der Zeichnung dargestellt, kann die Übergabestelle am Ende des Verfahrwegs des Zubringers 11 in der X'-Richtung angeordnet sein, damit der Übergabewechsler 17 nicht die Übergabe eines Werkzeugs zwischen dem Zwischenwechsler 9 und dem Zubringer 11 behindern kann, was - wie vorstehend schon gesagt - auf jeder beliebigen X'-Position erfolgen kann. Insoweit ist es zweckmäßig, die Übergabestelle für den Zubringer 11 gegenüber dem Wechselplatz 14 außerhalb desjenigen X'-Weges anzuordnen, der für die synchrone Mitführung des Zubringers 11 mit dem Maschinenständer 3 in dessen X-Richtung zur Verfügung stehen muß.

Der Austausch eines Werkzeugs zwischen dem Zubringer 11 und dem Magazin 13 erfolgt, während sich der Zwischenwechsler 9 in einer den Verfahrweg des Zubringers 11 übergreifenden Position befindet. Dort wartet der Zwischenwechsler 9 mit seiner Werkzeugaufnahme 1o solange, bis der Zubringer 11 das übernommene Werkzeug an den Wechselplatz 14 des Magazins 13 übergeben und von dort das nächstbenötigte Werkzeug übernommen, sowie zum Zwischenwechsler 9 hinbefördert hat. Während dieser Zeit kann der Maschinenständer 3 ungehindert in der X-Richtung verfahren, so daß sich das Warten des Zwischenwechslers 9 lediglich auf seine Verfahrbarkeit in der Y-Richtung bezieht.

Wie schließlich Fig. 1 noch zu entnehmen ist, ist der Zubringer 11 in Gestalt eines Schlittens an das Magazin 13 angegliedert. Das Magazin 13 besitzt ein Gestell 18 mit einer an der Seite zur Bearbeitungsmaschine hinliegenden Längsführung 19, an der ein Arm 2o in der X'-Richtung parallel zur X-Richtung längs verfahrbar angeordnet ist. Dieser Arm 2o trägt die Werkzeugaufnahme 12 und bildet somit den wesentlichen Teil des Zubringers 11.

## Ansprüche

1. Werkzeugmaschine in Gestalt eines Bearbeitungszentrums mit einem Werkzeugmagazin (13) mit einem langen, in X-Richtung angeordneten Werkstücktisch (2) und mit einer mit einer Werkzeugaufnahme (6) ausgestatteten Arbeitsspindel (5), die in einem senkrecht zum Werkstücktisch in Z-Richtung verfahrbaren Spindelkasten (4) gelagert ist, der an einem Ständer (3) in der Z-Richtung geführt ist, wobei der Ständer (3) und und der Werkstücktisch 2 quer zu dessen Längsrichtung, also in Y-Richtung, relativ zueinander verfahrbar sind, sowie der Ständer (3) entlang dem Werkstücktisch (2) in X-Richtung verfahrbar ist und wobei ferner am Spindelkasten (4) ein mit zumindest einem Wechselarm (8) bis zur Werkzeugaufnahme an der Spindel reichender Werkzeugwechsler (7) angeordnet ist, dadurch gekennzeichnet, daß am oder hinter dem Ständer (3) ein mit dem Ständer (3) in Y-Richtung verfahrbarer Zwischenwechsler (9) angeordnet ist, der einerseits in eine erste mit dem spindeseitigen Werkzeugwechsler (7) korrespondierende Wechselposition und andererseits in eine zweite Wechselposition an einem Kreuzungspunkt mit dem Förderweg eines Zubringers (11) bewegbar ist, der an der vom Spindelkasten (4) abgewandten Seite des Ständers (3) angeordnet ist und zumindest einen parallel zur X-Richtung mit dem Ständer (3) mitgeführten Werkzeugplatz (12) hat, der vorübergehend in der X-Richtung in eine Übergabeposition gegenüber einem Wechselplatz (14) am Werkzeugmagazin (13) unabhängig von der X-Position des Ständers (3) verfahrbar ist.

2. Werkzeugmaschine nach Anspruch 1 dadurch gekennzeichnet, daß der Zwischenwechsler (9) mit dem Ständer (3) in der Z-Richtung mitgeführt wird.

3. Werkzeugmaschine nach Anspruch 1 oder 2, dadurch gekennzeichnet, daß am Werkzeugmagazin (13) ein Übergabewechsler (17) angeordnet ist, der zwischen dem Wechselplatz (14) und der gegenüberliegenden Übergabeposition des Zubringers (11) verfahrbar ist.

4. Werkzeugmaschine nach Anspruch 3, dadurch gekennzeichnet, daß der Zubringer (11) in der Y-Richtung mit dem Ständer (3) mitgeführt ist und der Übergabewechsler (17) zwischen dem Wechselplatz (14) des Werkzeugmagazins (13) und der jeweiligen Y-Position des Zubringers (11) verfahrbar ist.

5. Werkzeugmaschine nach einem der Ansprüche 1 bis 2, dadurch gekennzeichnet, daß der Zubringer (11) eine feste Y-Position hat, die in jeder Y-Position des Ständers (3) von dem Zwischenwechsler (9) anfahrbar ist, dessen Verfahrweg in der Y-Richtung an die betreffende Y-Position des Ständers (3) angepaßt ist.

6. Werkzeugmaschine nach Anspruch 5, dadurch gekennzeichnet, daß der Zubringer (11) an das Magazin (13) angegliedert ist und daran an einer mit der X-Richtung parallelen Längsführung (19) gelagert ist.

7. Werkzeugmaschine nach einem der Ansprüche 1 - 4,
dadurch gekennzeichnet,
daß der Zwischenwechsler (9) und/oder der Zubringer (11) Teile eines in der X-Y-Richtung verfahrbaren Portals sind.

8. Werkzeugmaschine nach einem der Ansprüche 1 - 7,
dadurch gekennzeichnet,
daß das Werkzeugmagazin (13) eine innere Fördervorrichtung 15 mit Speicherplätzen (16) für die darin aufzunehmenden Werkzeuge hat, wobei der Wechselplatz (14) am Verfahrweg des Werkzeugplatzes (12) fest liegt und die Fördervorrichtung (15) mit dem betreffenden Speicherplatz (16) zur Werkzeugübernahme bzw. Übergabe an dem festen Wechselplatz (14) anhält.

9. Werkzeugmaschine nach Anspruch 8,
dadurch gekennzeichnet,
daß sich der feste Wechselplatz (14) des Magazins (13) und entsprechend die Übergabeposition des Zubringers (11) am Ende dessen Verfahrweges in X-Richtung befindet.

1o. Werkzeugmaschine nach einem der Ansprüche 1 - 9,
dadurch gekennzeichnet,
daß dem Zwischenwechsler (9) am oder nahe dem spindelseitigen Werkzeugwechsler (7) eine Warteposition zugeordnet ist und der Zubringer (11) in seine Übergabeposition gegenüber dem Wechselplatz (14) des Werkzeugmagazins (13) nur dann verfahren werden kann, wenn sich der Zwischenwechsler (9) in dieser Warteposition befindet.

11. Werkzeugmaschine nach einem der Ansprüche 1 - 1o,
dadurch gekennzeichnet,
daß der Zubringer (11) nur einen einzigen Werkzeugzeugplatz (12) hat, und solange in der X-Richtung mit dem Ständer (3) mitgeführt wird, wie sich nach der Werkzeugübergabe an den Zwischenwechsler (9) darin kein Werkzeug befindet, wobei der Zubringer (11) in seine Übergabeposition am Werkzeugmagazin (13) verfahrbar ist, während sich der Zwischenwechsler (9) in einer Wechselstellung nach der Werkzeugübergabe an den Zubringer (11) am Kreuzungspunkt mit dessen Förderweg befindet.

Fig.1

Fig.2